# EUROPÄISCHE PATENTSCHRIFT

(11) **EP 3 477 417 B1**
(45) Veröffentlichungstag und Bekanntmachung des Hinweises auf die Patenterteilung: **26.02.2020**
(21) Anmeldenummer: 18195191.4
(22) Anmeldetag: 18.09.2018
(51) Int. Cl.: G05D 23/19, F01P 7/00, F03G 7/06, F16K 31/02, H05B 3/46, H05B 3/48, F01P 7/16, H05B 3/40

(54) **BETÄTIGUNGSEINRICHTUNG MIT EINEM DEHNSTOFFELEMENT UND VENTILEINRICHTUNG**
ACTUATING DEVICE WITH A DILATION ELEMENT AND VALVE DEVICE
DISPOSITIF D'ACTIONNEMENT DOTÉ D'UN ÉLÉMENT EXTENSIBLE ET DISPOSITIF SOUPAPE

(30) Priorität: 19.09.2017 DE 102017121658
(43) Veröffentlichungstag der Anmeldung: 01.05.2019
(73) Patentinhaber: Eichenauer Heizelemente GmbH & Co. KG, 76870 Kandel (DE)
(72) Erfinder: Starck, Roland, 76756 Bellheim (DE); Le Coent, Patrick, 67435 Neustadt (DE); Walter, Steffen, 76199 Karlsruhe (DE); Marek, Peter, 76137 Karlsruhe (DE); Leininger, Philippe, 67500 Haguenau (FR)
(74) Vertreter: Hofstetter, Schurack & Partner

(56) Entgegenhaltungen:
- WO-A1-2012/013897
- DE-U1-202007 008 404
- FR-A1- 2 989 551
- JP-A- 2005 155 831

## Beschreibung

Die Erfindung betrifft eine Betätigungseinrichtung mit einem Dehnstoffelement, welches ein Gehäuse und wenigstens einen in dem Gehäuse aufgenommenen Dehnstoff umfasst. Ein Heizstift ist zum Erwärmen des Dehnstoffs mit elektrischer Energie beaufschlagbar. Der Heizstift tritt durch eine Verschlusseinrichtung des Dehnstoffelements hindurch. Durch Erwärmen des Dehnstoffs ist das Dehnstoffelement relativ zu dem Heizstift bewegbar. Des Weiteren betrifft die Erfindung eine Ventileinrichtung mit einer solchen Betätigungseinrichtung.
Eine Ventileinrichtung in Form eines thermostatischen Ventils, bei welchem eine derartige Betätigungseinrichtung zum Einsatz kommt, ist in der EP 0 853 267 B1 beschrieben. Hierbei ist ein Kolben, welcher in ein Gehäuse eines Dehnstoffelements hineinragt, als innen hohle Patrone ausgebildet. Die Patrone enthält im Inneren einen Heizleiter. Aus der Patrone sind an einem oberen, stirnseitigen Ende elektrische Leitungen herausgeführt. Wird durch Bestromen des Heizleiters ein in dem Gehäuse enthaltener Dehnstoff wie etwa ein Wachs erwärmt, so nimmt das Volumen des Dehnstoffs zu. Dies führt dazu, dass das Gehäuse des Dehnstoffelements relativ zu dem Kolben in eine axiale Richtung des Kolbens verschoben wird. Denn der Kolben ist in einem Ventilgehäuse des thermostatischen Ventils abgestützt. Das Gehäuse des Dehnstoffelements bewirkt bei dieser Relativbewegung gegen die Kraft einer Rückstellfeder ein Abheben eines Ventiltellers von einem Ventilsitz, welcher in dem Ventilgehäuse ausgebildet ist.

Die Druckschrift FR 2 989 551 A1 offenbart eine Betätigungseinrichtung mit einem Dehnstoffelement, welches ein Gehäuse und wenigstens einen in dem Gehäuse aufgenommenen Dehnstoff umfasst, und mit einem Heizstift, welcher zum Erwärmen des Dehnstoffs mit elektrischer Energie beaufschlagbar ist, wobei der Heizstift durch eine Verschlusseinrichtung des Dehnstoffelements hindurchtritt, und wobei das Dehnstoffelement durch das Erwärmen des Dehnstoffs relativ zu dem Heizstift bewegbar ist.

Als nachteilig ist hierbei der Umstand anzusehen, dass das Beheizen beziehungsweise Erwärmen des Dehnstoffs mittels des Kolbens einige Zeit in Anspruch nimmt, was sich nachteilig auf die Reaktionszeit des thermostatischen Ventils auswirkt. Weiterhin müssen sehr hohe Temperaturen zur ausreichend schnellen Erwärmung des Dehnstoffs aufgebracht werden. Dadurch besteht die Gefahr, dass Dichtungen beschädigt werden können. Außerdem erzeugen die hohen Temperaturen hohe Oberflächentemperaturen, Filmtemperaturen und Grenzschichttemperaturen am Übergang vom Kolben zum Dehnstoff. Dadurch besteht die Gefahr, dass der Dehnstoff vercrackt, sich also thermisch zersetzt, und es in der Folge zu einem Hubverlust der Betätigungseinrichtung beziehungsweise des Aktuators kommt. Auch in Bezug auf Undichtigkeiten des Kolbens beziehungsweise der Patrone ergeben sich Risiken, da aufgrund solcher Undichtigkeiten Dehnstoff Innere der Patrone gelangen kann und ein Druckverlust die Folge ist.

Aufgabe der vorliegenden Erfindung ist es daher, eine im Hinblick auf die Reaktionszeit und die Betriebssicherheit verbesserte Betätigungseinrichtung der eingangs genannten Art zu schaffen und eine Ventileinrichtung mit einer solchen Betätigungseinrichtung bereitzustellen.

Diese Aufgabe wird durch eine Betätigungseinrichtung mit den Merkmalen des Patentanspruchs 1 und durch eine Ventileinrichtung mit den Merkmalen des Patentanspruchs 15 gelöst. Vorteilhafte Ausgestaltungen mit zweckmäßigen Weiterbildungen der Erfindung sind in den abhängigen Patentansprüchen angegeben.

Die erfindungsgemäße Betätigungseinrichtung umfasst ein Dehnstoffelement mit einem Gehäuse und mit wenigstens einem in dem Gehäuse aufgenommenen Dehnstoff. Ein Heizstift der Betätigungseinrichtung ist mit elektrischer Energie beaufschlagbar, um den Dehnstoff zu erwärmen. Der Heizstift tritt durch eine Verschlusseinrichtung des Dehnstoffelements hindurch. Durch das Erwärmen des Dehnstoffs ist das Dehnstoffelement relativ zu dem Heizstift bewegbar. Der Heizstift weist einen Grundkörper mit einer dem Dehnstoff zugewandten Außenseite auf. An der Außenseite des Grundkörpers ist wenigstens ein Heizelement angeordnet, welches mit der elektrischen Energie beaufschlagbar ist. Durch das wenigstens eine Heizelement ist zumindest ein Teilbereich einer äußeren Oberfläche des Heizstifts gebildet. Diese äußere Oberfläche des Heizstifts, von welcher zumindest der Teilbereich durch das wenigstens eine Heizelement gebildet ist, ist in radialer Richtung des Heizstifts mit dem Dehnstoff in Kontakt. Auf diese Weise kann das wenigstens eine Heizelement Wärme an den Dehnstoff abgeben, welcher den Heizstift in radialer Richtung umgibt.

Dadurch, dass der Dehnstoff direkt mit dem wenigstens einen Heizelement in Kontakt ist beziehungsweise der Dehnstoff direkt die äußere Oberfläche des Heizstifts berührt, welche durch das wenigstens eine Heizelement bereitgestellt ist, ist eine unmittelbare beziehungsweise direkte Übertragung von durch das wenigstens eine Heizelement freigesetzter Heizwärme auf den Dehnstoff erreichbar. Wird also dem Heizelement elektrische Energie zugeführt, so führt dies zu einem Erwärmen, insbesondere Schmelzen, des wenigstens einen Dehnstoffs in dem Gehäuse des Dehnstoffelements. Die damit einhergehende Volumenzunahme des Dehnstoffs führt dazu, dass sich das Dehnstoffelement relativ zu dem Heizstift verschiebt. Der Heizstift taucht somit weniger weit in das Gehäuse ein, als dies bei nicht erwärmtem Dehnstoff der Fall ist.

Kommt die Betätigungseinrichtung in einer Ventileinrichtung wie etwa einem Thermostatventil zum Einsatz, so wird bevorzugt durch diese Bewegung des Dehnstoffelements relativ zu dem Heizstift ein Ventilglied der Ventileinrichtung bewegt. Beispielsweise wird ein Ventilteller der Ventileinrichtung insbesondere gegen die Kraft einer Rückstellfeder von einem Ventilsitz der Ventileinrichtung weg bewegt. Wird der Dehnstoff nicht mehr beheizt, der Heizstift also nicht mehr mit der elektrischen Energie beaufschlagt, so kühlt der Dehnstoff ab, wenn dem Dehnstoff nicht beispielsweise durch ein Fluid, welches durch das geöffnete Thermostatventil strömt, Wärme zugeführt wird. Dann drückt die Rückstellfeder oder ein derartiges Rückstellelement das Ventilglied wieder in seine Ausgangsstellung. Ist die Betätigungseinrichtung Bestandteil des Thermostatventils, so öffnet und schließt das Thermostatventil bei unbeheiztem Dehnstoffelement entsprechend der Temperatur des durch das Thermostatventil strömenden Fluids. Der Heizstift der Betätigungseinrichtung dient darüber hinaus zum gezielten Öffnen (oder Schließen) des Thermostatventils unabhängig von der Temperatur des durchströmenden Fluids. Die Betätigungseinrichtung kann jedoch auch als thermischer Aktor zum Betätigen eines Schiebers, einer Klappe oder dergleichen eingesetzt werden.

Dadurch, dass das wenigstens eine Heizelement an der Außenseite des Grundkörpers des Heizstifts angeordnet ist und somit das wenigstens eine Heizelement den zumindest einen Teilbereich der äußeren Oberfläche des Heizstifts bildet, lässt sich eine sehr rasche Übertragung von Heizwärme von dem Heizelement auf den wenigstens einen Dehnstoff erreichen. Folglich ist die Betätigungseinrichtung im Hinblick auf die Reaktionszeit verbessert. Denn durch das rasche Erwärmen des Dehnstoffs kann ein rasches Bewegen des Dehnstoffelements bewirkt werden. Des Weiteren ist die Betätigungseinrichtung im Hinblick auf die Betriebssicherheit verbessert. Denn aufgrund der sehr direkten Wärmeübertragung von dem wenigstens einen Heizelement auf den Dehnstoff, welcher mit dem Heizelement in Kontakt ist, brauchen keine so hohen Temperaturen aufgebracht zu werden. Dadurch können eine Beschädigung von Dichtungen und eine thermische Zersetzung des Dehnstoffs vermieden werden.

Das wenigstens eine Heizelement kann zumindest einen Heizdraht umfassen. Ein solcher Heizdraht kann nach Art einer freitragenden, eigensteifen Helix ausgebildet sein, oder der Heizdraht kann um den Grundkörper des Heizstifts gewickelt sein. Durch die Ausbildung des Heizelements mit dem Heizdraht lässt sich ein inniger Kontakt des Heizelements mit dem Dehnstoffelement erreichen, wobei der Heizdraht in den Dehnstoff eingebettet ist. Insbesondere, wenn der Dehnstoff aufgrund der Beigabe eines Zusatzstoffes wie etwa metallischer Späne oder Pulver oder gemahlenen Naturgraphits elektrisch leitfähig ist, kann der Heizdraht mit einem elektrisch isolierenden Überzug, etwa einem Isolierlack versehen sein. Jedoch auch wenn der Dehnstoff elektrisch nicht leitfähig ist, kann der Heizdraht mit einem schützenden Überzug versehen sein.

Zusätzlich oder alternativ kann das wenigstens eine Heizelement zumindest ein PTC-Element, also zumindest ein Kaltleiterelement umfassen. Auf diese Weise lässt sich eine sehr intensive Wärmefreisetzung mittels des Heizelements erreichen.

Bevorzugt umfasst das wenigstens eine Heizelement zumindest eine Schicht aus einem elektrisch leitfähigen Material. Durch ein solches Schichtheizelement lässt sich eine, etwa im Vergleich zu einem Heizdraht, besonders großflächige Wärmeübertragung und somit ein besonders rasches Erwärmen beziehungsweise Beheizen des wenigstens einen Dehnstoffs erreichen. Zudem ist so eine sehr weitgehend unbehinderte Bewegung des Dehnstoffelements relativ zu dem Heizstift erreichbar. Auch dies ist einer kurzen Reaktionszeit der Betätigungseinrichtung zuträglich. Bei Verwendung der Betätigungseinrichtung in einer Ventileinrichtung wie etwa einem Thermostatventil kann so ein besonders rasches Öffnen des Ventils erreicht werden. Weiterhin kann die Schicht einen positiven Temperaturkoeffizienten (PTC) aufweisen. Dadurch wird das Heizelement eigensicher und auf eine zusätzliche Temperaturüberwachung kann vorteilhaft verzichtet werden. Bevorzugt liegt dabei der Temperaturkoeffizient α im Bereich von 1.000 - 3.300 x 10⁻⁶/K.

Das die zumindest eine Schicht umfassende wenigstens eine Heizelement kann in einer Dünnschichttechnik auf den Grundkörper aufgebracht sein, etwa durch Abscheiden einer dünnen Schicht wenigstens eines Metalls wie etwa Platin, Kupfer oder Silber, insbesondere durch physikalische Gasphasenabscheidung oder chemische Gasphasenabscheidung. Als Dünnschichten, also Schichten im Bereich von Nanometern bis zu wenigen Mikrometern, können auf den Grundkörper jedoch auch Dispersionen aufgebracht werden, etwa Dispersionen von Wasserglas oder Acrylaten mit Kohlenstoffnanoröhren und/oder Graphit.

Besonders einfach ist es jedoch, wenn die Schicht aus dem elektrisch leitfähigen Material mittels einer Dickschichttechnik auf den Grundkörper aufgebracht und somit als Dickschicht ausgebildet ist. Etwa durch Rakeln, Pinseln, Siebdrucken, Aufsprühen oder dergleichen lässt sich nämlich in besonders einfacher und aufwandsarmer Weise das wenigstens eine Heizelement als Schichtheizelement in Dickschichttechnik bereitstellen. Insbesondere kann mittels einer solchen Dickschichttechnik eine Heizpaste wie etwa eine Ruthenium enthaltende Paste auf den Grundkörper aufgebracht werden, um das wenigstens eine Heizelement als Dickschicht bereitzustellen. Eine Schichtdicke der eingebrannten Heizschicht kann im eingebrannten Zustand bei etwa 20 µm liegen.

Insbesondere, wenn die Heizschicht durch Siebdrucken auf den Grundkörper aufgebracht wird, kann ein Runddruckverfahren zum Einsatz kommen, bei welchem die Heizschicht in Umfangsrichtung auf den Grundkörper aufgebracht wird.

Das Auftragen der Schicht aus dem elektrisch leitfähigen Material auf den Grundkörper erfolgt bevorzugt flächig, wobei auch einzelne Bahnen wie etwa mäanderförmige Bahnen, helixförmige Bahnen oder dergleichen vorgesehen sein können. Eine als Heizelement dienende Fläche in Form der Schicht kann auch in Teilflächen unterteilt sein, welche parallel und/oder seriell bestromt werden können. Es können auch mehrere nacheinander oder parallel von elektrischem Strom durchflossene Heizelemente vorgesehen sein, welche als jeweilige Schicht aus dem elektrischen leitfähigen Material ausgebildet sind. Durch das Vorsehen mehrerer Heizelemente kann eine besonders gleichmäßige Erwärmung des Dehnstoffs erreicht werden.

Vorzugsweise ist das wenigstens eine Heizelement an einen ersten elektrischen Leiter zum Zuführen der elektrischen Energie zu dem wenigstens einen Heizelement und an einen zweiten elektrischen Leiter zum Abführen der elektrischen Energie von dem wenigstens einen Heizelement angeschlossen. Derartige elektrische Leiter oder Kontaktbahnen weisen einen geringeren elektrischen Widerstand auf als das Heizelement, und sie sind aus dem Dehnstoffelement herausgeführt, sodass die Beaufschlagung des wenigstens einen Heizelements mit der elektrischen Energie einfach sichergestellt werden kann.

Zumindest einer der elektrischen Leiter kann mittels einer Dickschichttechnik auf den Grundkörper aufgebracht sein. Es können jedoch auch beide elektrischen Leiter als Dickschichtbahnen, also in Dickschichttechnik bereitgestellte Bahnen hergestellt werden. Bei der Fertigung des Heizstifts ist eine Herstellung des wenigstens einen Heizelements als Schicht aus dem elektrisch leitfähigen Material zeitgleich mit der Herstellung des zumindest einen elektrischen Leiters als Schicht möglich. Alternativ kann der zumindest eine elektrische Leiter vor dem Aufbringen der Heizschicht oder nach dem Aufbringen der Heizschicht auf den Grundkörper hergestellt werden.

Insbesondere, wenn der zumindest eine elektrische Leiter mittels der Dickschichttechnik auf den Grundkörper aufgebracht ist, kann als Material für den zumindest einen elektrischen Leiter eine Silberleitpaste verwendet werden, also eine elektrisch leitfähige Paste, welche Silberpartikel enthält. So lässt sich auf besonders einfache Art und Weise das Zuführen und Abführen der elektrischen Energie beziehungsweise des elektrischen Stroms sicherstellen.

Die elektrischen Leiter können linienförmig auf den Grundkörper aufgebracht sein und sich hierbei in eine axiale Richtung des Heizstifts erstrecken. Wenigstens ein Heizelement kann dann diese beiden elektrischen Leiter miteinander verbinden, wobei sich das wenigstens eine Heizelement hierbei in Umfangsrichtung des Heizstifts um den Grundkörper herum erstreckt und von dem ersten elektrischen Leiter zu dem zweiten elektrischen Leiter reicht. Beim Beaufschlagen des wenigstens einen Heizelements mit elektrischem Strom fließt der Strom somit in Umfangsrichtung um den Grundkörper. Insbesondere der Auftragungsprozess zum Anbringen der elektrischen Leiter an dem Grundkörper lässt sich auf diese Weise besonders sicher beziehungsweise prozesssicher gestalten. Die beiden elektrischen Leiter können in die axiale Richtung des Heizstifts im Wesentlichen die gleiche Länge aufweisen. Auch dies erleichtert das Auftragen beziehungsweise Aufbringen der elektrischen Leiter auf den Grundkörper.

Die elektrischen Leiter können auf den Grundkörper aufgebrachte Leitungsbahnen und mit den Leitungsbahnen verbundene Anschlusselemente umfassen.

Bei einer weiteren bevorzugten Ausgestaltung der Betätigungseinrichtung sind die Leitungsbahnen und die Anschlusselemente in einem ersten Bereich des Heizstifts, in welchem während eines Hubs des Dehnstoffelements eine Bewegung der Verschlusseinrichtung des Dehnstoffelements relativ zu dem Heizstift auftritt, in ein Kunststoffmaterial des Heizstifts eingebettet. Hierbei weist der Heizstift in dem ersten Bereich eine runde, durch das Kunststoffmaterial gebildete Kontur auf.

Dieses Einbetten der Leitungsbahnen und der mit den Leitungsbahnen verbundenen Anschlusselemente in das Kunststoffmaterial in dem ersten Bereich des Heizstifts ermöglicht es, Toleranzen eines Durchmessers des vorzugsweise stabförmigen Grundkörpers auszugleichen. Derartige Toleranzen können nämlich im Bereich von +80 µm bis -80 µm liegen. Indem der Grundkörper in dem ersten Bereich zusammen mit den sich in dem ersten Bereich befindenden Abschnitten der Leitungsbahnen und den sich in dem ersten Bereich befindenden Abschnitten der Anschlusselemente mit dem Kunststoffmaterial umgeben wird, lassen sich in dem ersten Bereich eine runde Kontur des Heizstifts und ein gewünschter Durchmesser des Heizstifts sehr exakt einstellen.

Dies ist vorteilhaft, weil in dem ersten Bereich die Relativbewegung zwischen dem Heizstift und der Verschlusseinrichtung des Dehnstoffelements auftritt. Durch die sehr exakte Abmessung des Heizstifts in dem ersten Bereich und die runde Kontur des Heizstifts in dem ersten Bereich lässt sich trotz der Bewegung des Dehnstoffelements und des Heizstifts relativ zueinander eine sehr hohe Dichtigkeit im Bereich der Verschlusseinrichtung des Dehnstoffelements erreichen.

Durch das Einbetten, insbesondere durch Umspritzen, des Grundkörpers mit den auf diesen aufgebrachten Leitungsbahnen und den mit den Leitungsbahnen verbundenen Anschlusselementen in das Kunststoffmaterial in dem ersten Bereich lässt sich zudem eine besonders glatte Oberfläche des im ersten Bereich vorzugsweise kreisrunden Heizstifts erzielen. Die glatte Oberfläche liegt dann also in demjenigen Bereich vor, in welchem der Heizstift durch die Verschlusseinrichtung hindurchgeführt ist, und in welchem die Bewegung der Verschlusseinrichtung relativ zu dem Heizstift bei dem Hub des Dehnstoffelements auftritt.

Das Einbetten der elektrischen Leiter und der Anschlusselemente in das Kunststoffmaterial kann insbesondere in einem Spritzgießprozess durch Umspritzen des Grundkörpers mit den auf diesen aufgebrachten Leitungsbahnen nach dem Verbinden der Anschlusselemente mit den Leitungsbahnen erfolgen. Als Kunststoff kann hierfür insbesondere Polyoxymethylen (POM) und/oder ein Polyamid, zum Einsatz kommen.

Zum Kontaktieren der Leitungsbahnen mit den Anschlusselementen können die als Anschlusselemente dienenden Drähte, Pins oder Stanzbleche auf die Leitungsbahnen gelötet werden.

In einem an den ersten Bereich angrenzenden weiteren Bereich des Heizstifts kann das Kunststoffmaterial dem Heizstift eine von der runden Kontur abweichende Gestalt verleihen. In diesem weiteren Bereich kann auch eine Verankerung eines Endes des Grundkörpers in dem Kunststoffmaterial durch Formschlusselemente oder dergleichen vorgesehen sein. Die beispielsweise als Drähte oder Pins ausgebildeten Anschlusselemente können durch das in dem weiteren Bereich des Heizstifts vorgesehene Kunststoffmaterial hindurchtreten, insbesondere aus diesem weiteren Bereich heraustreten. So lassen sich Enden dieser Anschlusselemente etwa nach Art eines Steckers einfach elektrisch kontaktieren. Der weitere Bereich des Heizstifts mit den aus dem weiteren Bereich heraustretenden Anschlusselementen kann somit insbesondere nach Art eines Steckverbinders ausgebildet sein.

Vorzugsweise füllt das Kunststoffmaterial in dem ersten Bereich einen Spalt aus, welcher sich in eine axiale Richtung des Heizstifts erstreckt und in einer elektrischen Isolierung des wenigstens einen Heizelements ausgebildet ist. Durch die elektrische Isolierung sind auch die Leitungsbahnen abgedeckt. Das Vorsehen des Spalts führt dazu, dass die elektrische Isolierung des Heizelements den Grundkörper in Umfangsrichtung nicht vollflächig abdeckt. Vielmehr bleibt der Grundkörper im Bereich des Spalts frei von der Isolierung. Dies erleichtert das Aufbringen der Isolierung auf den Grundkörper etwa in einem Runddruckverfahren. Denn es kann so vermieden werden, dass die Isolierung in Umfangsrichtung mit zu Beginn des Auftragungsprozesses aufgebrachtem Isolierungsmaterial überlappt und sich an einer solchen Überlappungsstelle eine Wulst ausbildet. Das Vorsehen der elektrischen Isolierung des Heizelements, welche auch die Leitungsbahnen abdeckt, lässt sich somit besonders prozesssicher gestalten.

Der Spalt ist vorzugsweise so platziert, dass sich weder eine Leitungsbahn noch ein Anschlusselement im Bereich des Spalts befindet. So kann sichergestellt werden, dass trotz des Vorsehens des Spalts die im Heizbetrieb Strom führenden Komponenten des Heizstifts elektrisch zu dem Dehnstoff hin elektrisch isoliert sind. Bevorzugt weist der Spalt eine Breite zwischen 0,3 mm und 3 mm auf.

Durch das nach dem Aufbringen der elektrischen Isolierung erfolgende Einbetten des ersten Bereichs in das Kunststoffmaterial, insbesondere durch Umspritzen, wird der Spalt in dem ersten Bereich ausgefüllt. So kann sichergestellt werden, dass trotz des Vorsehens der den Spalt aufweisenden Isolierung der Heizstift in dem ersten Bereich die runde Kontur mit der glatten Oberfläche aufweist.

Die elektrische Isolierung kann insbesondere durch ein Glas und/oder durch ein keramisches Material bereitgestellt sein.

Vorzugsweise ist eine Dicke der elektrischen Isolierung, insbesondere der Glasschicht, im Bereich des wenigstens einen Heizelements größer als im Bereich der Leitungsbahnen. So kann sichergestellt werden, dass die elektrische Isolierung, insbesondere die Glasschicht, im Bereich des wenigstens einen Heizelements keine Poren aufweist. Auf diese Weise ist eine besonders sichere elektrische Isolierung zwischen einem elektrisch leitfähigen Material des Heizelements und dem wenigstens einen Dehnstoff erreichbar. Dies ist dann vorteilhaft, wenn der Dehnstoff elektrisch leitfähig ist, etwa aufgrund der Zugabe eines elektrisch leitfähigen Zusatzstoffs.

Um die größere Dicke der elektrischen Isolierung im Bereich des wenigstens einen Heizelements zu erreichen, kann im Bereich des wenigstens einen Heizelements ein die elektrische Isolierung bereitstellendes Material in wenigstens zwei Schichten auf das elektrisch leitfähige Material des Heizelements aufgebracht sein, insbesondere durch doppeltes Auftragen des die elektrische Isolierung bereitstellendes Materials.

Vorteilhaft ist es weiterhin, wenn die elektrische Isolierung in Umfangsrichtung des Heizstifts in zwei diskreten Schritten beziehungsweise zwei Abschnitten auf den Grundkörper aufgebracht wird. Dies lässt sich fertigungstechnisch leichter realisieren als ein Aufbringen der Isolierung in Umfangsrichtung des Heizstifts oder Heizstabs in einem einzigen Schritt oder Abschnitt. Liegen nämlich Anfang und Ende der in Umfangsrichtung aufgebrachten Isolierung direkt nebeneinander oder berühren sich, dann kann es zu einem unkontrollierbaren Verschmieren der Isolierung oder Isolierschicht kommen. Wird dagegen erst nur eine Hälfte beziehungsweise ein erster Abschnitt der elektrischen Isolierung aufgetragen und zwischengetrocknet, dann können ein Anfang der in einem zweiten Schritt aufgebrachten Isolierschicht und ein Ende der in dem ersten Schritt aufgebrachten Isolierschicht nicht mehr verschmieren.

Vorzugsweise sind die elektrischen Leiter zumindest in einem ersten Bereich, in welchem während eines Hubs des Dehnstoffelements eine Bewegung der Verschlusseinrichtung des Dehnstoffelements relativ zu dem Heizstift auftritt, und in einem zweiten Bereich, welcher über die Verschlusseinrichtung übersteht, mit einer elektrischen Isolierung versehen. Dies ist beispielsweise dann vorteilhaft, wenn die elektrischen Leiter innerhalb eines Ventilgehäuses einer Ventileinrichtung, deren Ventilglied mittels der Betätigungseinrichtung betätigt werden kann, mit einem elektrisch leitfähigen Medium wie etwa einer Kühlflüssigkeit zum Kühlen eines Verbrennungsmotors eines Kraftfahrzeugs in Kontakt geraten können. Denn dann sind die elektrischen Leiter gegenüber einem solchen Medium elektrisch isoliert. Zudem sorgt ein solcher Überzug in Form der elektrischen Isolierung dafür, dass ein besonders reibungsarmes Entlanggleiten der elektrischen Leiter an der Verschlusseinrichtung des Dehnstoffelements stattfindet, wenn der Hub des Dehnstoffelements auftritt. So lässt sich dauerhaft eine gute Dichtigkeit in dem Bereich sicherstellen, in welchem der Heizstift durch die Verschlusseinrichtung des Dehnstoffelements hindurchtritt.

Dies gilt insbesondere, wenn die elektrische Isolierung durch ein Glas und/oder durch ein keramisches Material bereitgestellt ist. Ein Keramiküberzug hat eine höhere elektrische Durchschlagsfestigkeit als eine elektrisch isolierende Schutzschicht aus Glas. Eine elektrische Isolierung aus dem keramischen Material ist zudem insbesondere dann vorteilhaft, wenn der Dehnstoff elektrisch leitfähig ist, beispielsweise aufgrund einer Zumischung von gemahlenem Naturgraphit oder eines solchen Zusatzstoffs zu einem Wachs, einem Paraffin oder dergleichen.

Als weiter vorteilhaft hat es sich gezeigt, wenn die elektrische Isolierung in dem ersten Bereich eine geringere Rauigkeit aufweist als in dem zweiten Bereich. Beispielsweise kann die elektrische Isolierung in dem ersten Bereich poliert sein, um die Rauigkeit zu vermindern. Auch dies verhindert ein Auftreten von Undichtigkeiten in dem Bereich, in welchem die Relativbewegung zwischen dem Heizstift und der Verschlusseinrichtung auftritt, wenn der Hub des Dehnstoffelements stattfindet. Durch den Hub des Dehnstoffelements kann sich ein Ventilglied aus einer Geschlossenstellung in eine Offenstellung beziehungsweise aus der Offenstellung in die Geschlossenstellung bewegen, wenn das Dehnstoffelement mit dem Ventilglied einer Ventileinrichtung gekoppelt ist, welche durch die Betätigungseinrichtung betätigt wird.

Von Vorteil ist weiterhin, wenn der Heizstift durch das Vorsehen der elektrischen Isolierung in dem ersten Bereich eine runde Kontur aufweist. Beispielsweise kann der Überzug aus dem Glas und/oder dem keramischen Material so dick gewählt werden, dass die Oberfläche des Heizstiftes in dem ersten Bereich trotz des Vorsehens der elektrischen Leiter rund ist. Auch auf diese Weise lässt sich eine sehr hohe Dichtigkeit des Dehnstoffelements sicherstellen und zudem eine besonders reibungsarme Relativbewegung des Dehnstoffelements relativ zu dem Heizstift.

Die elektrischen Leiter können zumindest in einem ersten Bereich, in welchem während eines Hubs des Dehnstoffelements eine Bewegung der Verschlusseinrichtung des Dehnstoffelements relativ zu dem Heizstift auftritt, derart in Ausnehmungen angeordnet sein, welche in dem Grundkörper ausgebildet sind, dass eine auf die elektrischen Leiter aufgebrachte elektrische Isolierung mit der Außenseite des Grundkörpers bündig abschließt. Beispielsweise können die elektrischen Leiter in axialen Nuten geführt sein, sodass im Durchführungsbereich, in welchem der Heizstift durch die Verschlusseinrichtung durchtritt und die Relativbewegung zwischen der Verschlusseinrichtung und dem Heizstift stattfindet, der Heizstift eine runde Kontur aufweist. Auch auf diese Weise lässt sich zumindest in dem ersten Bereich dauerhaft eine gute Abdichtung zwischen dem Heizstift und der Verschlusseinrichtung sicherstellen. Wenn auf die elektrischen Leiter keine elektrische Isolierung aufgebracht ist, so können die in den Ausnehmungen angeordneten elektrischen Leiter mit der Außenseite des Grundkörpers bündig abschließen.

Als weiter vorteilhaft hat es sich gezeigt, wenn die elektrischen Leiter zumindest in einem ersten Bereich, in welchem während eines Hubs des Dehnstoffelements eine Bewegung der Verschlusseinrichtung des Dehnstoffelements relativ zu dem Heizstift auftritt, als konzentrische Kreiszylinder ausgebildet sind, welche mittels einer elektrisch isolierenden Schicht voneinander elektrisch isoliert sind. So ist sichergestellt, dass der Heizstift zumindest in dem ersten Bereich die runde Kontur aufweist, was für die Dichtheit im Durchführungsbereich des Heizstifts durch die Verschlusseinrichtung vorteilhaft ist. Die elektrisch isolierende Schicht zwischen den konzentrischen Kreiszylindern der beiden elektrischen Leiter kann durch ein Glas und/oder durch ein keramisches Material bereitgestellt sein.

Der Grundkörper kann aus einem elektrisch leitfähigen Material gebildet sein, insbesondere aus einem Stahl. Auf diese Weise kann das Zuführen oder das Abführen von elektrischer Energie zu oder von dem wenigstens einen Heizelement mittels des Grundkörpers selber erreicht werden. Dadurch lässt sich der Aufwand zum elektrischen Kontaktieren des wenigstens einen Heizelements besonders gering halten.

Hierbei hat es sich als vorteilhaft gezeigt, wenn zwischen dem Grundkörper und einem der beiden elektrischen Leiter einerseits und zwischen dem Grundkörper und dem wenigstens einen Heizelement andererseits eine elektrische Isolierung angeordnet ist. Durch den Grundkörper ist dann der andere der beiden elektrischen Leiter bereitgestellt. Als elektrische Isolierung kann eine Isolierschicht aus Glas und/oder Keramik zwischen dem Material des Grundkörpers und dem einen der beiden elektrischen Leiter sowie zwischen dem Grundkörper und dem wenigstens einen Heizelement vorgesehen sein. Ein solcher Heizstift etwa aus dem Stahl ist besonders robust, funktionssicher und langlebig.

Vorzugsweise ist der Grundkörper aus einem elektrisch isolierenden Material, insbesondere einem keramischen Material, gebildet. Insbesondere kann der Grundkörper als massiver Keramikkörper ausgebildet sein. Ein solcher, als massiver Keramikkörper ausgebildeter Grundkörper ist besonders robust und stabil. Des Weiteren braucht bei Ausbildung des Grundkörpers aus dem elektrisch isolierenden Material keine gesonderte elektrische Isolierung zwischen dem Grundkörper und dem wenigstens einen Heizelement beziehungsweise zwischen dem Grundkörper und den elektrischen Leitern vorgesehen zu werden, welche das Beaufschlagen des wenigstens einen Heizelements mit der elektrischen Energie ermöglichen.

Zudem ist insbesondere ein Keramikkörper schlecht wärmeleitend. Die von dem wenigstens einen Heizelement abgegebene Wärme zum Aufheizen, insbesondere Schmelzen, des wenigstens einen Dehnstoffs wird so fast ausschließlich an den Dehnstoff abgegeben. Dies ist einerseits einer verkürzten Reaktionszeit der Betätigungseinrichtung zuträglich. Zudem wird weniger elektrische Leistung benötigt, um den Dehnstoff zu erwärmen. In Folge dessen werden auch keine so hohen Temperaturen benötigt, was eine Vercrackung des Dehnstoffs vermindert. Ein weiterer Vorteil ist, dass bei einem massiven Grundkörper nicht die Gefahr besteht, dass aufgrund einer Undichtigkeit Dehnstoff in das Innere des Grundkörpers gelangen kann. So ist ein Druckverlust oder Dehnstoffverlust vermieden, welcher ansonsten zu einem Ausfall des Bauteils führen könnte.

Des Weiteren wird auch die Verschlusseinrichtung, welche die Abdichtung zwischen dem Dehnstoffelement und dem Heizstift sicherstellt, kaum mit Wärme beaufschlagt. Die Verschlusseinrichtung wird also nicht so heiß, wie dies bei Verwendung eines stärker wärmeleitenden Grundkörpers der Fall wäre. Dies ist der Dichtheit in dem Bereich der Verschlusseinrichtung zuträglich.

Des Weiteren kann durch die Verwendung eines Keramikkörpers als dem Grundkörper erreicht werden, dass die thermischen Ausdehnungskoeffizienten des Grundkörpers, des wenigstens einen Heizelements sowie elektrischer Isolierungen von elektrischen Leitern, an welche das wenigstens eine Heizelement angeschlossen ist, im Wesentlichen gleich beziehungsweise sehr ähnlich sind. Dies ist insbesondere für die Lebensdauer des Heizstifts wichtig. Des Weiteren sorgt dies für eine dauerhafte, gute Dichtheit im Bereich der Verschlusseinrichtung.

Der keramische Grundkörper kann aus Aluminiumoxid (Al₂O₃) gebildet sein. Vorzugsweise ist der Grundkörper jedoch aus Steatit gebildet. Bei dem Grundkörper kann es sich also insbesondere um ein gebranntes Keramikbauteil aus gemahlenem Steatit handeln. Dies hat den Vorteil, dass ein Grundkörper aus Steatit kostengünstiger ist als ein Grundkörper aus Aluminiumoxid. Zudem ist der aus Steatit gebildete Grundkörper nicht porös, und er hat eine geringere Wärmeleitfähigkeit als ein Grundkörper aus Aluminiumoxid. Zwar ist ein aus Steatit gebildeter Grundkörper brüchiger als ein aus Aluminiumoxid gebildeter Grundkörper. Dennoch hat sich die Verwendung eines aus Steatit gebildeten keramischen Grundkörpers gegenüber einem aus Aluminiumoxid gebildeten keramischen Grundkörper als vorteilhafter erwiesen.

Der Grundkörper kann auch als ein an seinem freien Ende geschlossener Hohlkörper, bevorzugt als keramischer Hohlkörper ausgebildet sein. Dabei lässt sich der in dem Grundkörper ausgebildete Hohlraum zum Entlangführen von elektrischen Leitern nutzen, welche dem Beaufschlagen des wenigstens einen Heizelements mit der elektrischen Energie dienen.

Dementsprechend hat es sich als vorteilhaft gezeigt, wenn zumindest einer der elektrischen Leiter bereichsweise im Inneren des Hohlkörpers angeordnet ist. Eine Abdichtung des zumindest einen elektrischen Leiters im Hohlraum kann dabei beispielsweise durch einen Klebedichtstoff erfolgen. Ist der Hohlkörper aus einem keramischen Material gebildet, kann eine Abdichtung des zumindest einen elektrischen Leiters, welcher aus dem Inneren des keramischen Hohlkörpers zu dem an der Außenseite des Hohlkörpers angeordneten wenigstens einen Heizelement hindurchtritt, beispielsweise beim Sintern der Keramik sichergestellt werden.

Des Weiteren kann der wenigstens eine elektrische Leiter als in dem Hohlkörper aufgetragene Dispersion ausgebildet sein, welche beim Aufbringen entlang des Hohlraums zu einer Durchtrittsstelle fließt, an welcher der Kontakt mit dem wenigstens einen Heizelement hergestellt wird. Des Weiteren kann der zumindest eine elektrische Leiter durch eine elektrisch leitende Keramik bereitgestellt sein. Auch auf diese Weise lässt sich eine Abdichtung bei der Durchführung des zumindest einen elektrischen Leiters aus dem Inneren des Hohlkörpers durch eine Wand des Hohlkörpers zu dem an der Außenseite angeordneten wenigstens einen Heizelement sicherstellen.

Das wenigstens eine Heizelement kann eine Schutzschicht umfassen, welche an der dem wenigstens einen Dehnstoff zugewandten äußeren Oberfläche des Heizstifts angeordnet ist. So ist eine Beeinträchtigung von elektrisch leitfähigem Material des wenigstens einen Heizelements aufgrund der Bewegung des Dehnstoffelements relativ zu dem Heizstift besonders weitgehend vermieden. Des Weiteren kann durch eine solche Schutzschicht eine elektrische Isolierung zwischen dem elektrisch leitfähigen Material und dem wenigstens einen Dehnstoff sichergestellt werden. Dies ist insbesondere dann vorteilhaft, wenn der wenigstens eine Dehnstoff aufgrund einer Zugabe eines elektrisch leitfähigen Zusatzstoffs elektrisch leitfähig ist. Die im Betrieb des wenigstens einen Heizelements, also aufgrund eines Fließens von elektrischem Strom durch das elektrisch leitfähige Material des Heizelements beziehungsweise die Heizschicht hindurch freigesetzte Wärme braucht also lediglich durch die elektrisch isolierende Schutzschicht hindurchzutreten, um den Dehnstoff zu erwärmen. Die Schutzschicht kann durch einen elektrisch isolierenden Lack und/oder ein Glas und/oder ein keramisches Material bereitgestellt sein.

Vorzugsweise ist das wenigstens eine Heizelement einem ersten, freien Ende des Grundkörpers näher als einem zweiten Ende des Grundkörpers. Dadurch ist sichergestellt, dass auch bei einem Hub des Dehnstoffelements und damit einhergehend einem Sich-Herausbewegen des Heizstifts aus dem Dehnstoffelement das wenigstens eine Heizelement vergleichsweise weit von der Verschlusseinrichtung beabstandet ist. So wird eine unerwünschte Beaufschlagung der Verschlusseinrichtung mit von dem wenigstens einen Heizelement freigesetzter Wärme besonders weitgehend vermieden. Dies ist insbesondere der Dichtheit im Bereich der Verschlusseinrichtung zuträglich.

Im Bereich des zweiten Endes ist der Grundkörper bevorzugt an einem Steckergehäuse festgelegt. Ein solches Steckergehäuse kann Teil eines Anschlusssteckers sein, über welchen der Heizstift an eine elektrische Energiequelle angeschlossen werden kann. In dem Bereich des zweiten Endes des Grundkörpers kann der Grundkörper auch direkt an einem Ventilgehäuse einer Ventileinrichtung festgelegt sein, wenn die Betätigungseinrichtung zum Betätigen eines Ventilglieds der Ventileinrichtung zum Einsatz kommt. Der Heizstift ist somit an dem Steckergehäuse oder an dem Ventilgehäuse abgestützt und ortsfest, während sich das Dehnstoffelement infolge des Erwärmens des wenigstens einen Dehnstoffs relativ zu dem Heizstift bewegen kann.

Zum Festlegen des zweiten Endes des Grundkörpers an dem Steckergehäuse oder an dem Ventilgehäuse kann in dem Grundkörper wenigstens ein Formschlusselement wie beispielsweise eine Vertiefung, eine Einbuchtung, eine Einkerbung, eine Ringnut oder dergleichen vorgesehen sein. Beim Ausbilden des Steckergehäuses oder des Ventilgehäuses, etwa durch Spritzgießen, kann dann der Grundkörper mit dem Steckergehäuse oder dem Ventilgehäuse verbunden werden. Derartige Formschlusselemente, insbesondere in Form von beispielsweise zwei Einbuchtungen oder Einkerbungen, können nachträglich in den Grundkörper eingebracht sein. Insbesondere bei der Ausbildung des Grundkörpers aus einem keramischen Material können derartige Formschlusselemente jedoch auch bereits vor dem Sintern des keramischen Materials ausgebildet werden.

Die erfindungsgemäße Ventileinrichtung, welche insbesondere als Thermostatventil ausgebildet sein kann, weist eine erfindungsgemäße Betätigungseinrichtung auf. Durch das Erwärmen des Dehnstoffs ist ein mit dem Dehnstoffelement gekoppeltes Ventilglied der Ventileinrichtung relativ zu dem Heizstift bewegbar. Dadurch ist die Reaktionszeit der Ventileinrichtung verbessert. Denn durch Erwärmen des Dehnstoffs kann das Ventilglied, etwa in Form eines Ventiltellers, rasch bewegt werden, insbesondere in eine Offenstellung verbracht werden. Des Weiteren ist die Betriebssicherheit der Ventileinrichtung verbessert.

Der Grundkörper des Heizstifts kann an einem Steckergehäuse der Betätigungseinrichtung festgelegt sein. Dann ist bevorzugt das Steckergehäuse in einem Ventilgehäuse der Ventileinrichtung angeordnet. So lässt sich die Ventileinrichtung einfach mit der Betätigungseinrichtung ausstatten, und der Heizstift ist an dem Steckergehäuse abgestützt und ortsfest. Dies vereinfacht die Beaufschlagung des Heizstifts mit der elektrischen Energie, da entsprechende elektrische Leiter ebenfalls ortsfest verbleiben, während sich das Gehäuse des Dehnstoffelements relativ zu dem Heizstift bewegt.

Die für die erfindungsgemäße Betätigungseinrichtung beschriebenen Vorteile und bevorzugten Ausführungsformen und gelten auch für die erfindungsgemäße Ventileinrichtung und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind. Es sind somit auch Ausführungen und Merkmalskombinationen als offenbart anzusehen, die nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: in einer Schnittansicht eine als Thermostatventil ausgebildete Ventileinrichtung mit einem Dehnstoffelement, wobei an einer Außenseite eines Grundkörpers eines Heizstifts der Ventileinrichtung eine Heizschicht angeordnet ist;
- Fig. 2: den Heizstift mit einem Anschlussstecker in einer Perspektivansicht;
- Fig. 3: den Heizstift in einer weiteren Perspektivansicht, aus welcher eine beispielhafte Anordnung der Heizschicht und von elektrischen Leitern beziehungsweise Kontaktbahnen an dem Grundkörper hervorgeht;
- Fig. 4: die Heizschicht und die Kontaktbahnen bei einer Variante des Heizstifts in einer Perspektivansicht;
- Fig. 5: die Heizschicht und die Kontaktbahnen bei der Variante des Heizstifts gemäß Fig. 3, bei welcher die Heizschicht zwei in Serie geschaltete Heizzonen umfasst;
- Fig. 6: die Heizschicht und die Kontaktbahnen beziehungsweise Leitungsbahnen bei einer weiteren Variante des Heizstifts in einer Perspektivansicht;
- Fig. 7: schematisch eine weitere Variante des Heizstifts, bei welcher der Grundkörper mit den Leitungsbahnen sowie Anschlusselementen, etwa in Form von Anschlussdrähten, in einem Teilbereich des Grundkörpers mit Kunststoff umspritzt ist; und
- Fig. 8: den Heizstift gemäß Fig. 7, welcher im Bereich einer Dichtung in ein Gehäuse des Dehnstoffelements hineinragt.

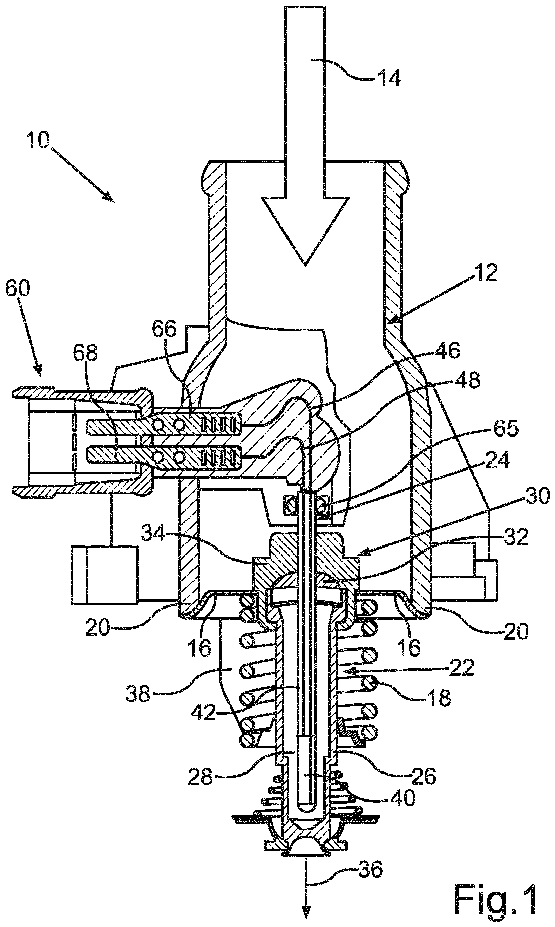

Eine in Fig. 1 geschnittene dargestellte Ventileinrichtung kann insbesondere als Thermostatventil 10 ausgebildet sein. Ein solches Thermostatventil 10 kann beispielsweise in einem Kühlkreislauf für einen Verbrennungsmotor eines Kraftfahrzeugs zum Einsatz kommen. In ein Ventilgehäuse 12 des Thermostatventils 10 eintretende Kühlflüssigkeit ist in Fig. 1 durch einen Pfeil 14 veranschaulicht. Ein Ventilglied in Form eines Ventiltellers 16 wird mittels einer Feder 18 gegen einen durch das Ventilgehäuse 12 gebildeten Ventilsitz 20 gedrückt. Dadurch kann die Kühlflüssigkeit nicht aus dem Ventilgehäuse 12 austreten.

Um das Thermostatventil 10 zu öffnen, welches vorliegend als beheizbares Regelventil ausgebildet ist, ist eine Betätigungseinrichtung vorgesehen, welche ein Dehnstoffelement 22 und einen Heizstift 24 beziehungsweise Heizstab umfasst. Das Dehnstoffelement 22 weist ein Gehäuse 26 auf, in welchem ein Dehnstoff 28 wie etwa ein Wachs, ein Paraffin oder ein Paraffinwachs aufgenommen beziehungsweise angeordnet ist. Das Dehnstoffelement 22 weist des Weiteren eine Verschlusseinrichtung 30 auf, welche einen abdichtenden Verschlussstopfen 32 und eine an dem Gehäuse 26 festgelegte Verschlusskappe 34 umfasst. Durch diese Verschlusseinrichtung 30 tritt der Heizstift 24 hindurch. Der Heizstift 24 ist bei dem in Fig. 1 gezeigten Thermostatventil 10 an dem Ventilgehäuse 12 festgelegt beziehungsweise abgestützt und somit ortsfest.

Zum Erwärmen beziehungsweise Schmelzen des Dehnstoffs 28 kann dem Heizstift 24 elektrische Energie zugeführt werden. Wenn sich der Dehnstoff 28 dadurch erwärmt, insbesondere schmilzt, nimmt das Volumen des Dehnstoffs 28 zu. Dies führt zu einer Bewegung des Gehäuses 26 des Dehnstoffelements 22 relativ zu dem Heizstift 24, bei welcher der Heizstift 24 zunehmend weniger weit in das Gehäuse 26 hineinragt. Insbesondere das Gehäuse 26 des Dehnstoffelements 22 bewegt sich also relativ zu dem ortsfesten Heizstift 24 in eine axiale Richtung des Heizstifts 24, welche in Fig. 1 durch einen weiteren Pfeil 36 veranschaulicht ist. Bei einem Hub des Dehnstoffelements 22 tritt somit auch eine Bewegung der Verschlusseinrichtung 30 des Dehnstoffelements 22 relativ zu dem Heizstift 24 auf.

Das Dehnstoffelement 22 ist mit dem Ventilglied in Form des Ventiltellers 16 gekoppelt. Vorliegend ist der Ventilteller 16 mittels der Verschlusskappe 34 der Verschlusseinrichtung 30 bewegbar. Somit bewirkt das Erwärmen des Dehnstoffs einen Hub des Ventiltellers 16, welcher sich hierbei von dem Ventilsitz 20 weg bewegt. Dies geschieht gegen die Kraft der Feder 18, welche an einer mit dem Ventilgehäuse 12 verbundenen Halterung 38 einerseits und an dem Ventilteller 16 andererseits abgestützt ist.

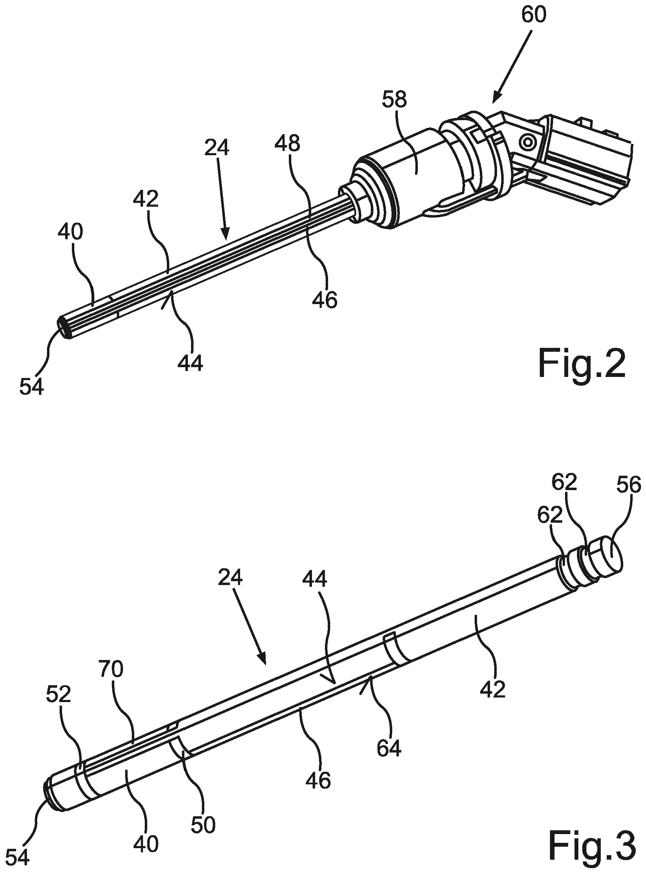

Zum Erwärmen des Dehnstoffs 28 weist der Heizstift 24 wenigstens ein Heizelement 40, 70 auf (vergleiche Fig. 2 und Fig. 3). Insbesondere aus Fig. 2 und aus Fig. 3 ist ersichtlich, dass der Heizstift 24 einen Grundkörper 42 mit einer dem Dehnstoff 28 zugewandten Außenseite 44 aufweist. Das wenigstens eine Heizelement 40, 70 ist an der Außenseite 44 des Grundkörpers 42 angeordnet. Durch das wenigstens eine Heizelement 40, 70 ist somit ein Teilbereich einer äußeren Oberfläche des Heizstifts 24 gebildet. Diese Oberfläche und somit auch das Heizelement 40, 70 ist in radialer Richtung des Heizstifts 24 mit dem Dehnstoff 28 in Kontakt. Mit anderen Worten umgibt der Dehnstoff 28 den Heizstift 24 in Umfangsrichtung. Folglich kann das in Umfangsrichtung den Teilbereich der äußeren Oberfläche des Heizstifts 24 bildende Heizelement 40, 70 Wärme besonders ungehindert an den Dehnstoff 28 abgeben.

Dadurch kann der Dehnstoff 28 besonders rasch erwärmt werden, wenn dem Heizelement 40, 70 elektrische Energie zugeführt wird.

Das an der Außenseite 44 des Grundkörpers 42 angeordnete wenigstens eine Heizelement 40, 70 ist gemäß Fig. 2 und gemäß Fig. 3 als Schicht-Heizelement beziehungsweise als Heizschicht ausgebildet. Eine solche Heizschicht kann auf den Grundkörper 42 insbesondere in einer Dickschichttechnik aufgebracht sein, beispielsweise durch Drucken, insbesondere mittels Siebdruck, mittels eines Rakels, mittels eines Pinsels, durch Aufsprühen oder dergleichen. Jedoch ist auch die Ausbildung der Heizschicht in einer Dünnschichttechnik denkbar.

Zum Zuführen der elektrischen Energie beziehungsweise des elektrischen Stroms zu dem wenigstens einen Heizelement 40, 70 beziehungsweise zum Abführen der elektrischen Energie von dem wenigstens einen Heizelement 40, 70 sind ein erster elektrischer Leiter 46 und ein zweiter elektrischer Leiter 48 vorgesehen (vergleiche auch Fig. 1, Fig. 4 und Fig. 5). Die elektrischen Leiter 46, 48 sind gemäß den in Fig. 2 bis Fig. 5 gezeigten Varianten als Kontaktbahnen ausgebildet, welche ebenfalls auf die Außenseite 44 des Grundkörpers 42 aufgebracht sind. Diese Kontaktbahnen können analog der Heizschicht in Dickschichttechnik auf die Außenseite 44 des Grundkörpers 42 aufgebracht sein, also beispielsweise durch Drucken, Rakeln oder Pinseln einer Silberleitpaste auf den Grundkörper 42.

Das Anschließen des Heizelements 40, 70 an die elektrischen Leiter 46, 48 beziehungsweise das Kontaktieren des Heizelements 40, 70 beziehungsweise der Heizschicht(en) mit den elektrischen Leitern 46, 48 kann auf unterschiedliche Arten vorgenommen werden. Beispielsweise kontaktiert gemäß Fig. 2 der erste elektrische Leiter 46 das als Heizschicht ausgebildete Heizelement 40 in axialer Richtung des Heizstifts 24. Ebenso kontaktiert der zweite elektrische Leiter 48 das Heizelement 40 beziehungsweise die Heizschicht axial an einem zweiten Ende des Heizelements 40.

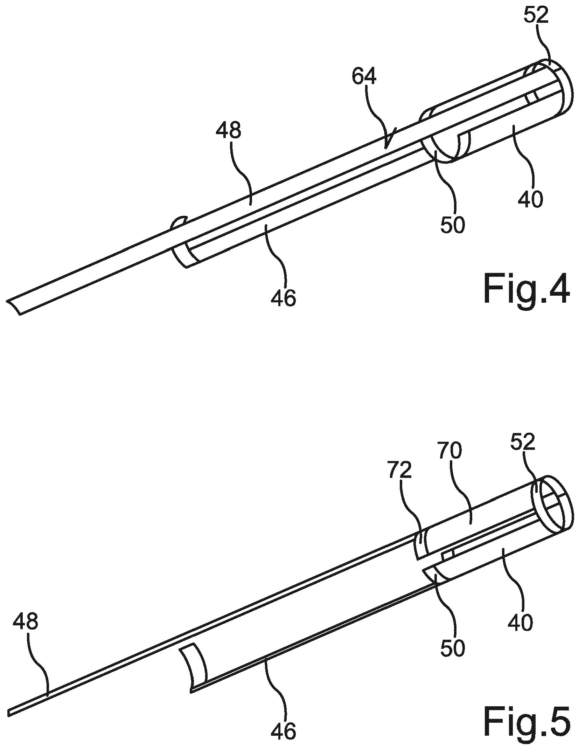

Gemäß Fig. 3 und Fig. 5 sind zwei Heizelemente 40, 70 beziehungsweise Heizzonen vorgesehen, welche elektrisch in Reihe geschaltet sind. Hierbei wird der elektrische Strom dem ersten Heizelement 40 über einen teilweise um den Grundkörper 42 umlaufenden Teilring 50 des ersten elektrischen Leiters 46 zugeführt. Über einen vollständig um den Grundkörper 42 umlaufenden Ring 52 erfolgt dann die Beaufschlagung des zweiten Heizelements 70 mit elektrischem Strom. Der zweite elektrische Leiter 48 ist an das zweite Heizelement 70 über einen weiteren Teilring 72 angeschlossen.

In Fig. 4 kontaktiert der erste elektrische Leiter 46 das Heizelement 40 mittels des teilweise um den Grundkörper 42 umlaufenden Teilrings 50. Am in axialer Richtung gegenüberliegenden Ende des Heizelements 40 ist der zweite elektrische Leiter 48 an das Heizelement 40 mittels des vollständig um den Grundkörper 42 umlaufenden Rings 52 angeschlossen. Bei der Variante gemäß Fig. 4 ist nur das eine Heizelement 40 vorgesehen.

Es sind jedoch in Varianten der Betätigungseinrichtung auch andere als die vorliegend dargestellten Varianten der Kontaktierung des wenigstens einen an der Außenseite 44 des Grundkörpers 42 angeordneten Heizelements 40, 70 möglich.

Insbesondere aus Fig. 2 und aus Fig. 3 ist des Weiteren ersichtlich, dass das Heizelement 40, 70 einem ersten, freien Ende 54 des Grundkörpers 42 näher ist als einem zweiten Ende 56. Gemäß Fig. 2 ist der Grundkörper 42 im Bereich des zweiten Endes 56 an einem Steckergehäuse 58 eines Anschlusssteckers 60 festgelegt. Hierfür kann der Grundkörper 42 im Bereich des zweiten Endes 56 Ringnuten 62 oder dergleichen Elemente zur Ausbildung eines Formschlusses aufweisen. Der Formschluss kann beim Fertigen des Steckergehäuses 58 etwa durch Kunststoff-Spritzgießen ausgebildet werden. Der Anschlussstecker 60 kann dann auf geeignete Weise in dem Ventilgehäuse 12 angeordnet werden. Es kann jedoch auch vorgesehen sein, dass der Heizstift 24 direkt in das Ventilgehäuse 12 integriert ist (vergleiche Fig. 1).

Die Kontaktbahnen beziehungsweise elektrischen Leiter 46, 48 sind bevorzugt zumindest in dem Bereich, in welchen beim Hub des Ventiltellers 16 eine Bewegung der Verschlusseinrichtung 30 relativ zu dem Heizstift 24 auftritt, mit einer elektrischen Isolierung 64 versehen (vergleiche Fig. 3 und Fig. 4). Dadurch ist verhindert, dass die elektrischen Leiter 46, 48 mit Kühlflüssigkeit in Kontakt kommen, welche sich in dem Ventilgehäuse 12 befindet. Vorzugsweise ist diese elektrische Isolierung 64 etwa in Form einer Schutzschicht aus Glas und/oder eines Keramiküberzuges zumindest bis zu einer Dichtung 65 ausgebildet, mittels welcher der Heizstift 24 gegenüber dem Ventilgehäuse 12 abgedichtet ist. Die Dichtung 65 ist vorliegend als O-Ring ausgebildet (vergleiche Fig. 1).

Die elektrische Isolierung 64 beziehungsweise Überglasung kann in dem Bereich, in welchem eine Relativbewegung zwischen dem Heizstift 24 und der Verschlusseinrichtung 30 auftritt, poliert sein, um die Rauigkeit zu vermindern und Undichtigkeiten zu verhindern. Des Weiteren können die elektrischen Leiter 46, 48 beziehungsweise Kontaktbahnen zumindest in diesem Durchführbereich durch die Verschlusseinrichtung 30 in Rinnen oder Nuten angeordnet sein, welche in dem Grundkörper 42 ausgebildet sind. Es kann jedoch auch durch eine entsprechende Dicke der elektrischen Isolierung 64 sichergestellt sein, dass der Heizstift 24 zumindest in demjenigen Bereich, in welchem die Relativbewegung zwischen dem Heizstift 24 und der Verschlusseinrichtung 30 auftritt, eine runde Kontur aufweist. Durch die elektrische Isolierung 64 kann des Weiteren eine zu dem jeweiligen Heizelement 40, 70 gehörende Schutzschicht gebildet sein, welche das elektrisch leitfähige Material des wenigstens einen Heizelements 40, 70 schützt. Dies ist insbesondere dann vorteilhaft, wenn der Dehnstoff 28 elektrisch leitfähig ist.

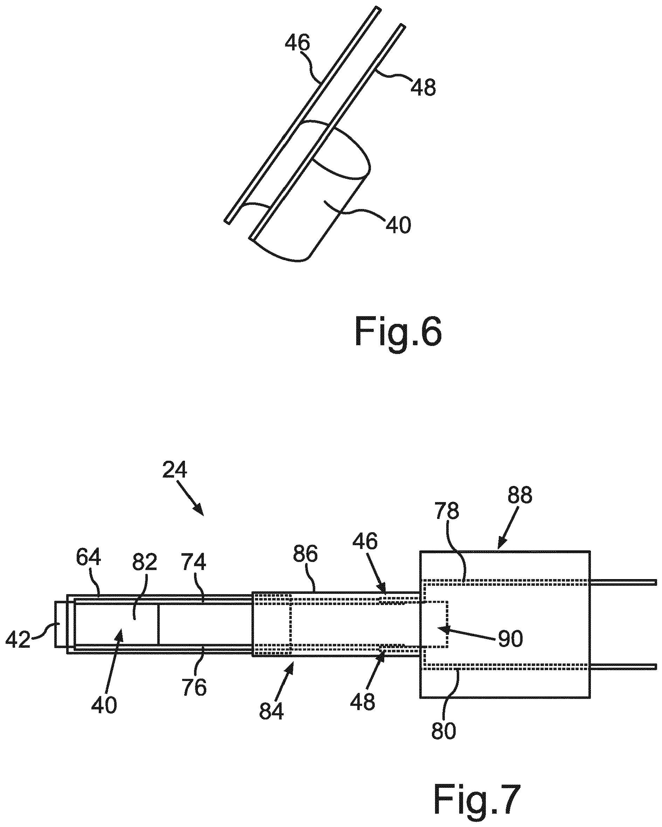

Fig. 6 zeigt eine Variante, bei welcher auf die Teilringe 50, 72 beziehungsweise den Ring 52 (vergleiche Fig. 4 und Fig. 5) verzichtet werden kann. Denn hier erstrecken sich die beiden elektrischen Leiter 46, 48 in die axiale Richtung des Heizstifts 24, welche in Fig. 1 durch den Pfeil 36 veranschaulicht ist. Die elektrischen Leiter 46, 48 können in Form von parallelen Linien auf den (in Fig. 6 nicht gezeigten), insbesondere stabförmigen, Grundkörper 42 aufgetragen werden. Das als Heizschicht ausgebildete Heizelement 40 erstreckt sich dann in Umfangsrichtung von dem ersten elektrischen Leiter 46 zu dem zweiten elektrischen Leiter 48. Beim Beaufschlagen des Heizelements 40 mit Strom fließt der Strom somit in Umfangsrichtung und nicht wie bei den in Fig. 4 und Fig. 5 gezeigten Varianten in die axiale Richtung des Heizstifts 24.

Die elektrischen Leiter 46, 48 können auf verschiedene Arten mit Anschlüssen 66, 68 verbunden sein, welche im Bereich des Anschlusssteckers 60 ausgebildet sind (vergleiche Fig. 1). Beispielsweise kann die Kontaktierung der elektrischen Leiter 46, 48 beziehungsweise Kontaktbahnen mit den Anschlüssen 66, 68 durch Klemmringe, durch Verlöten, durch Verschweißen, durch Verkleben, durch Einspritzen, durch eine klemmende Vorumspritzung mit Kunststoff oder dergleichen vorgenommen werden. Auch kann beim Verbinden der beispielsweise durch die Silberleitpaste bereitgestellte Kontaktbahnen beziehungsweise elektrischen Leiter 46, 48 mit einem den Anschluss 66, 68 bereitstellenden Metallteil das Metallteil in die Silberleitpaste eingespritzt beziehungsweise eingebettet werden.

Fig. 7 zeigt schematisch eine Variante des Heizstifts 24, bei welcher ein Durchmesser desselben in demjenigen Bereich, in welchem der Heizstift 24 durch die Verschlusseinrichtung 30 hindurchtritt und in welchem eine Bewegung der Verschlusseinrichtung 30 relativ zu dem Heizstift 24 auftritt, besonders genau eingestellt ist.

Der Grundkörper 42 des Heizstifts 24 ist hierbei insbesondere als Keramikstab ausgebildet. Die elektrischen Leiter 46, 48 umfassen Leitungsbahnen 74, 76, welche auf den Grundkörper 42 aufgebracht sind. Die elektrischen Leiter 46, 48 umfassen des Weiteren Anschlusselemente etwa in Form von ausgestanzten Blechen beziehungsweise Stanzblechen, Pins oder Drähten 78, 80, welche vorliegend mit einem Endbereich der jeweiligen Leitungsbahn 74, 76 verbunden sind. Beispielsweise kann die Verbindung des Drahts 78 mit der Leitungsbahn 74 und die Verbindung des Drahts 80 mit der Leitungsbahn 76 durch Löten erfolgen. Das Heizelement 40 umfasst eine Heizschicht 82 sowie die elektrische Isolierung 64, welche beispielsweise als Glasschicht beziehungsweise Überglasung ausgebildet ist. Diese elektrische Isolierung 64 deckt auch einen Teil der Leitungsbahnen 74, 76 ab.

Vorzugsweise ist die Isolierung 64 beziehungsweise Überglasung in Umfangsrichtung des Heizstifts 24 nicht vollflächig auf den Grundkörper 42 aufgetragen, sondern es ist ein Spalt freigelassen, welcher sich in die axiale Richtung des Heizstifts 24 erstreckt. Der Spalt kann beispielsweise eine Breite von etwa 300 µm aufweisen und ist so erstellt, dass sich keine der Leitungsbahnen 74, 76 und auch nicht die Heizschicht 82 im Bereich des Spalts befinden.

In einem ersten Bereich 84 des Heizstifts 24 ist dieser Spalt durch ein Kunststoffmaterial 86 ausgefüllt. In diesem ersten Bereich 84 tritt während eines Hubs des Dehnstoffelements 22 eine Bewegung der Verschlusseinrichtung 30 des Dehnstoffelements 22 relativ zu dem Heizstift 24 auf. Mit anderen Worten tritt also der Heizstift 24 in diesem ersten Bereich 84 des Heizstifts 24 durch die Verschlusseinrichtung 30 hindurch. Folglich gleitet beim Bewegen des Dehnstoffelements 22 relativ zu dem Heizstift 24 die Verschlusseinrichtung 30 an diesem ersten Bereich 84 des Heizstifts 24 entlang.

Durch Umspritzen eines Teils der Leitungsbahnen 74, 76 sowie der diese abdeckenden elektrischen Isolierung 64 und eines Teils der Drähte 78, 80 mit dem Kunststoffmaterial 86 werden diese Bereiche der Leitungsbahnen 74, 76 sowie die Anschlussstellen der Drähte 78, 80 an die Leitungsbahnen 74, 76 in das Kunststoffmaterial 86 eingebettet. Das Kunststoffmaterial 86 füllt hierbei in dem ersten Bereich 84 den in der elektrischen Isolierung 64 vorgesehenen Spalt aus.

Zudem sorgt das Umspritzen des Grundkörpers 42 in dem ersten Bereich 84 mit dem Kunststoffmaterial 86 dafür, dass Durchmessertoleranzen des stabförmigen Grundkörpers 42 ausgeglichen werden, welche im Bereich von +80 µm bis -80 µm liegen können. Durch das Vorsehen des Kunststoffmaterials 86 weist der Heizstift 24 somit in dem ersten Bereich 84 eine exakt runde Kontur mit einer besonders glatten Oberfläche auf. Zudem kann der Durchmesser des Heizstifts 24 durch das Umspritzen mit dem Kunststoffmaterial 86 in dem ersten Bereich 84 sehr genau eingestellt werden.

In einem an den ersten Bereich 84 angrenzenden weiteren Bereich 88 des Heizstifts 24 treten die Drähte 78, 80 aus dem Kunststoffmaterial 86 heraus. In diesem weiteren Bereich 88 ist auch ein Ende 90 des Grundkörpers 42, welches einem freien Ende des Grundkörpers 42 gegenüberliegt, in das Kunststoffmaterial 86 eingebettet beziehungsweise in dem Kunststoffmaterial 86 fixiert. Die aus dem weiteren Bereich 88 heraustretenden Enden der Drähte 78, 80 können auf geeignete Weise an die auf Seiten des Thermostatventils 10 vorgesehenen Anschlüsse 66, 68 (vergleiche Fig. 1) angeschlossen werden.

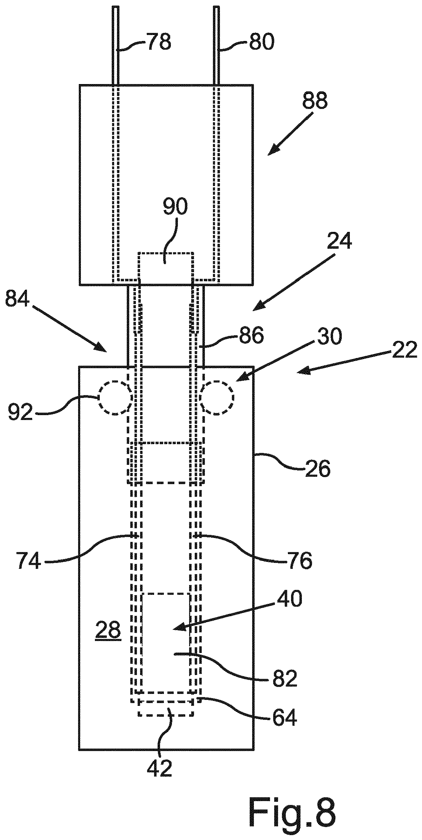

In Fig. 8 sind von der Betätigungseinrichtung für das Thermostatventil 10 zusätzlich zu dem in Fig. 7 gezeigten Heizstift 24 auch das Gehäuse 26 des Dehnstoffelements 22 sowie die Verschlusseinrichtung 30 schematisch gezeigt. Das Gehäuse 26 kann demgemäß nach Art einer endseitig geschlossenen Hülse ausgebildet sein. Die Verschlusseinrichtung 30 umfasst bei dieser Variante eine Dichtung 92, welche beispielsweise als O-Ring, insbesondere als O-Ring aus Ethylen-Propylen-DienKautschuk (EPDM) ausgebildet sein kann. Bei der Bewegung des Dehnstoffelements 22 relativ zu dem Heizstift 24 gleitet diese Dichtung 92 direkt auf dem Kunststoffmaterial 86 entlang, welches in dem ersten Bereich 84 des Heizstifts 24 die Oberfläche des Heizstifts 24 bildet. Die Dichtung 92 gleitet somit bei dem Hub des Dehnstoffelements 22, bei welchem die Bewegung der Verschlusseinrichtung 30 relativ zu dem Heizstift 24 stattfindet, nicht direkt auf der elektrischen Isolierung 64 beziehungsweise Schutzschicht, welche insbesondere aus Glas gebildet sein kann.

Eine Schichtdicke des durch Umspritzen des Grundkörpers 42 in dem ersten Bereich 84 vorhandenen Kunststoffmaterials 86 kann in diesem Gleitbereich der Dichtung 92 bei etwa 500 µm bis 1 mm liegen. Bei dem Hub des Dehnstoffelements 22 bewegt sich die Dichtung 92, welche in dem Gehäuse 26 ortsfest angeordnet ist, zusammen mit dem Gehäuse 26 des Dehnstoffelements 22.

Das Kunststoffmaterial 86 kann insbesondere Polyoxymethylen (POM) und/oder ein Polyamid umfassen.

## Patentansprüche

1. Betätigungseinrichtung, insbesondere für ein Thermostatventil (10), mit einem Dehnstoffelement (22), welches ein Gehäuse (26) und wenigstens einen in dem Gehäuse (26) aufgenommenen Dehnstoff (28) umfasst, und mit einem Heizstift (24), welcher zum Erwärmen des Dehnstoffs (28) mit elektrischer Energie beaufschlagbar ist, wobei der Heizstift (24) durch eine Verschlusseinrichtung (30) des Dehnstoffelements (22) hindurchtritt, und wobei das Dehnstoffelement (22) durch das Erwärmen des Dehnstoffs (28) relativ zu dem Heizstift (24) bewegbar ist,
**dadurch gekennzeichnet, dass**
der Heizstift (24) einen Grundkörper (42) mit einer dem Dehnstoff (28) zugewandten Außenseite (44) aufweist, wobei an der Außenseite (44) wenigstens ein Heizelement (40, 70) angeordnet ist, welches mit der elektrischen Energie beaufschlagbar ist, und wobei durch das wenigstens eine Heizelement (40, 70) zumindest ein Teilbereich einer äußeren Oberfläche des Heizstifts (24) gebildet ist, welche in radialer Richtung des Heizstifts (24) mit dem Dehnstoff (28) in Kontakt ist.

2. Betätigungseinrichtung nach Anspruch 1,
**dadurch gekennzeichnet, dass**
das wenigstens eine Heizelement (40, 70) zumindest einen Heizdraht und/oder zumindest ein PTC-Element und/oder zumindest eine Schicht aus einem elektrisch leitfähigen Material umfasst.

3. Betätigungseinrichtung nach Anspruch 1 oder 2,
**dadurch gekennzeichnet, dass**
das wenigstens eine, insbesondere mittels einer Dickschichttechnik auf den Grundkörper (42) aufgebrachte, Heizelement (40, 70) an einen ersten elektrischen Leiter (46) zum Zuführen der elektrischen Energie zu dem wenigstens einen Heizelement (40, 70) und an einen zweiten elektrischen Leiter (48) zum Abführen der elektrischen Energie von dem wenigstens einen Heizelement (40, 70) angeschlossen ist.

4. Betätigungseinrichtung nach Anspruch 3,
**dadurch gekennzeichnet, dass**
zumindest einer der elektrischen Leiter (46, 48) als Schicht aus einem elektrisch leitfähigen Material, insbesondere als Dickschicht, auf den Grundkörper (42) aufgebracht ist.

5. Betätigungseinrichtung nach einem der Ansprüche 3 oder 4,
**dadurch gekennzeichnet, dass**
die elektrischen Leiter (46, 48) auf den Grundkörper (42) aufgebrachte Leitungsbahnen und mit den Leitungsbahnen verbundene Anschlusselemente umfassen, wobei die Leitungsbahnen und die Anschlusselemente in einem ersten Bereich des Heizstifts (24), in welchem während eines Hubs des Dehnstoffelements (22) eine Bewegung der Verschlusseinrichtung (30) des Dehnstoffelements (22) relativ zu dem Heizstift (24) auftritt, insbesondere durch Umspritzen, in ein Kunststoffmaterial des Heizstifts (24) eingebettet sind, wobei der Heizstift (24) in dem ersten Bereich eine runde, durch das Kunststoffmaterial gebildete Kontur aufweist.

6. Betätigungseinrichtung nach Anspruch 5,
**dadurch gekennzeichnet, dass**
das Kunststoffmaterial in dem ersten Bereich einen Spalt ausfüllt, welcher sich in eine axiale Richtung des Heizstifts (24) erstreckt und in einer elektrischen Isolierung (64) des wenigstens einen Heizelements (40, 70) ausgebildet ist, wobei durch die elektrische Isolierung (64) auch die Leitungsbahnen abgedeckt sind.

7. Betätigungseinrichtung nach Anspruch 6,
**dadurch gekennzeichnet, dass**
eine Dicke der, insbesondere durch ein Glas und/oder durch ein keramisches Material bereitgestellten, elektrischen Isolierung (64) im Bereich des wenigstens einen Heizelements (40, 70) größer ist als im Bereich der Leitungsbahnen.

8. Betätigungseinrichtung nach einem der Ansprüche 3 bis 7,
**dadurch gekennzeichnet, dass**
die elektrischen Leiter (46, 48) zumindest in einem ersten Bereich, in welchem während eines Hubs des Dehnstoffelements (22) eine Bewegung der Verschlusseinrichtung (30) des Dehnstoffelements (22) relativ zu dem Heizstift (24) auftritt, und in einem zweiten Bereich, welcher über die Verschlusseinrichtung (30) übersteht, mit einer elektrischen Isolierung (64) versehen sind.

9. Betätigungseinrichtung nach Anspruch 8,
**dadurch gekennzeichnet, dass**
die, insbesondere durch ein Glas und/oder durch ein keramisches Material bereitgestellte, elektrische Isolierung (64) in dem ersten Bereich eine geringere Rauigkeit aufweist als in dem zweiten Bereich und/oder der Heizstift (24) durch das Vorsehen der elektrischen Isolierung (64) in dem ersten Bereich eine runde Kontur aufweist.

10. Betätigungseinrichtung nach einem der Ansprüche 3 bis 9,
**dadurch gekennzeichnet, dass**
die elektrischen Leiter (46, 48) zumindest in einem ersten Bereich, in welchem während eines Hubs des Dehnstoffelements (22) eine Bewegung der Verschlusseinrichtung (30) des Dehnstoffelements (22) relativ zu dem Heizstift (24) auftritt,
- derart in Ausnehmungen angeordnet sind, welche in dem Grundkörper (42) ausgebildet sind, dass eine auf die elektrischen Leiter (46, 48) aufgebrachte elektrische Isolierung (64) mit der Außenseite (44) des Grundkörpers (42) bündig abschließt und/oder
- als konzentrische Kreiszylinder ausgebildet sind, welche mittels einer elektrisch isolierenden Schicht voneinander elektrisch isoliert sind.

11. Betätigungseinrichtung nach einem der Ansprüche 3 bis 10,
**dadurch gekennzeichnet, dass**
der Grundkörper (42) aus einem elektrisch leitfähigen Material, insbesondere aus einem Stahl, gebildet ist, wobei zwischen dem Grundkörper (42) und einem der beiden elektrischen Leiter (46, 48) einerseits und zwischen dem Grundkörper (42) und dem wenigstens einen Heizelement (40, 70) andererseits eine elektrische Isolierung angeordnet ist, und wobei durch den Grundkörper (42) der andere der beiden elektrischen Leiter (46, 48) bereitgestellt ist.

12. Betätigungseinrichtung nach einem der Ansprüche 1 bis 11,
**dadurch gekennzeichnet, dass**
der Grundkörper (42) aus einem elektrisch isolierenden Material, insbesondere einem keramischen Material, gebildet ist.

13. Betätigungseinrichtung nach einem der Ansprüche 3 bis 11 oder nach Anspruch 12 in dessen Rückbezug auf einen der Ansprüche 3 bis 10,
**dadurch gekennzeichnet, dass**
der Grundkörper (42) als an seinem freien Ende geschlossener Hohlkörper ausgebildet ist, wobei zumindest einer der elektrischen Leiter (46, 48) bereichsweise im Inneren des Hohlkörpers angeordnet ist.

14. Betätigungseinrichtung nach einem der Ansprüche 1 bis 13,
**dadurch gekennzeichnet, dass**
das wenigstens eine Heizelement (40, 70) eine, insbesondere durch einen elektrisch isolierenden Lack und/oder ein Glas und/oder ein keramisches Material bereitgestellte, Schutzschicht (64) umfasst, welche an der dem wenigstens einen Dehnstoff (28) zugewandten äußeren Oberfläche des Heizstifts (24) angeordnet ist.

15. Ventileinrichtung, insbesondere Thermostatventil (10), mit einer Betätigungseinrichtung nach einem der Ansprüche 1 bis 14, wobei durch das Erwärmen des Dehnstoffs (28) ein mit dem Dehnstoffelement (22) gekoppeltes Ventilglied (16) der Ventileinrichtung relativ zu dem Heizstift (24) bewegbar ist.

## Claims

1. An actuating device, in particular for a thermostat valve (10), with an expansion substance element (22) including a housing (26) and at least one expansion substance (28) received in the housing (26), and with a heating pin (24), which can be supplied with electrical energy for heating the expansion substance (28), wherein the heating pin (24) passes through a closure device (30) of the expansion substance element (22), and wherein the expansion substance element (22) is movable relative to the heating pin (24) by heating the expansion substance (28),
**characterized in that**
the heating pin (24) comprises a base body (42) with an outer side (44) facing the expansion substance (28), wherein at least one heating element (40, 70) is arranged on the outer side (44), which can be supplied with the electrical energy, and wherein at least a partial area of an outer surface of the heating pin (24) is formed by the at least one heating element (40, 70), which is in contact with the expansion substance (28) in radial direction of the heating pin (24).

2. The actuating device according to claim 1,
**characterized in that**
the at least one heating element (40, 70) includes at least one heating wire and/or at least one PTC element and/or at least one layer of an electrically conductive material.

3. The actuating device according to claim 1 or 2,
**characterized in that**
the at least one heating element (40, 70) in particular applied to the base body (42) by means of a thick-film technology is connected to a first electrical conductor (46) for supplying the electrical energy to the at least one heating element (40, 70) and to a second electrical conductor (48) for discharging the electrical energy from the at least one heating element (40, 70).

4. The actuating device according to claim 3,
**characterized in that**
at least one of the electrical conductors (46, 48) is applied to the base body (42) as a layer of an electrically conductive material, in particular as a thick film.

5. The actuating device according to any one of claims 3 or 4,
**characterized in that**
the electrical conductors (46, 48) include conducting paths applied to the base body (42) and connecting elements connected to the conducting paths, wherein the conducting paths and the connecting elements are embedded in a plastic material of the heating pin (24), in particular by overmolding, in a first area of the heating pin (24), in which a movement of the closure device (30) of the expansion substance element (22) relative to the heating pin (24) occurs during a stroke of the expansion substance element (22), wherein the heating pin (24) has a round contour formed by the plastic material in the first area.

6. The actuating device according to claim 5,
**characterized in that**
the plastic material fills a gap in the first area, which extends in an axial direction of the heating pin (24) and is formed in an electrical insulation (64) of the at least one heating element (40, 70), wherein the conducting paths are also covered by the electrical insulation (64).

7. The actuating device according to claim 6,
**characterized in that**
a thickness of the electrical insulation (64) in particular provided by a glass and/or by a ceramic material is greater in the area of the at least one heating element (40, 70) than in the area of the conducting paths.

8. The actuating device according to any one of claims 3 to 7,
**characterized in that**
the electrical conductors (46, 48) are provided with an electrical insulation (64) at least in a first area, in which a movement of the closure device (30) of the expansion substance element (22) relative to the heating pin (24) occurs during a stroke of the expansion substance element (22), and in a second area, which protrudes beyond the closure device (30).

9. The actuating device according to claim 8,
**characterized in that**
the electrical insulation (64) in particular provided by a glass and/or by a ceramic material has a lower roughness in the first area than in the second area and/or the heating pin (24) has a round contour in the first area by the provision of the electrical insulation (64).

10. The actuating device according to any one of claims 3 to 9,
**characterized in that**
the electrical conductors (46, 48)
- are arranged in recesses, which are formed in the base body (42), such that an electrical insulation (64) applied to the electrical conductors (46, 48) is flush with the outer side (44) of the base body (42), and/or
- are formed as concentric circular cylinders, which are electrically insulated from each other by means of an electrically insulating layer,
at least in a first area, in which a movement of the closure device (30) of the expansion substance element (22) relative to the heating pin (24) occurs during a stroke of the expansion substance element (22),

11. The actuating device according to any one of claims 3 to 10,
**characterized in that**
the base body (42) is formed of an electrically conductive material, in particular of a steel, wherein an electrical insulation is arranged between the base body (42) and one of the two electrical conductors (46, 48) on the one hand and between the base body (42) and the at least one heating element (40, 70) on the other hand, and wherein the other one of the two electrical conductors (46, 48) is provided by the base body (42).

12. The actuating device according to any one of claims 1 to 11,
**characterized in that**
the base body (42) is formed of an electrically insulating material, in particular a ceramic material.

13. The actuating device according to any one of claims 3 to 11 or according to claim 12 in relation thereof to one of claims 3 to 10,
**characterized in that**
the base body (42) is formed as a hollow body closed at its free end, wherein at least one of the electrical conductors (46, 48) is arranged in the interior of the hollow body in certain areas.

14. The actuating device according to any one of claims 1 to 13,
**characterized in that**
the at least one heating element (40, 70) includes a protective layer (64) in particular provided by an electrically insulating varnish and/or a glass and/or a ceramic material, which is arranged on the outer surface of the heating pin (24) facing the at least one expansion substance (28).

15. A valve device, in particular thermostat valve (10), with an actuating device according to any one of claims 1 to 14, wherein a valve member (16) of the valve device coupled to the expansion substance element (22) is movable relative to the heating pin (24) by heating the expansion substance (28).

## Revendications

1. Dispositif d'actionnement surtout pour une soupape thermostatique (10) avec un élément en matière extensible (22) comportant un boîtier (26) et au moins une matière extensible (28) reçue dans le boîtier (26), et avec une tige chauffante (24) qui peut être alimentée en énergie électrique pour chauffer la matière extensible (28), la tige chauffante (24) passant à travers un dispositif de fermeture (30) de l'élément en matière extensible (22), et l'élément en matière extensible (22) étant déplaçable par le chauffage de la matière extensible (28) relatif à la tige chauffante (24),
**caractérisé en ce que**
la tige chauffante (24) comporte un corps de base (42) avec une face extérieure (44) faisant face à la matière extensible (28), au moins un élément de chauffage (40, 70) étant agencé à la face extérieure (44) qui peut être alimentée en énergie électrique, et au moins une partie d'une surface extérieure de la tige chauffante (24) étant formée par l'au moins un élément de chauffage (40, 70) qui dans la direction radiale de la tige chauffante (24) est en contact avec la matière extensible (28).

2. Dispositif d'actionnement selon la revendication 1,
**caractérisé en ce que**
l'au moins un élément de chauffage (40, 70) comporte au moins un fil chauffant et/ou au moins un élément CTP et/ou au moins une couche d'un matériau électriquement conducteur.

3. Dispositif d'actionnement selon la revendication 1 ou 2,
**caractérisé en ce que**
l'au moins un élément de chauffage (40, 70), appliqué au corps de base (42) surtout par une technique des couches épaisses, est relié à un premier conducteur électrique (46) pour fournir de l'énergie électrique à l'au moins un élément de chauffage (40, 70) et à un second conducteur électrique (48) pour décharger de l'énergie électrique de l'au moins un élément de chauffage (40, 70).

4. Dispositif d'actionnement selon la revendication 3,
**caractérisé en ce que**
au moins un des conducteurs électriques (46, 48) est appliqué au corps de base (42) comme une couche d'un matériau électriquement conducteur, surtout comme une couche épaisse.

5. Dispositif d'actionnement selon l'une quelconque des revendications 3 ou 4,
**caractérisé en ce que**
les conducteurs électriques (46, 48) comportent des pistes conductrices appliquées au corps de base (42) et des éléments de raccordement reliés aux pistes conductrices, les pistes conductrices et les éléments de raccordement dans une première zone de la tige chauffante (24), dans laquelle pendant une course de l'élément en matière extensible (22) un mouvement du dispositif de fermeture (30) de l'élément en matière extensible (22) relatif à la tige chauffante (24) se produit, sont incorporés, surtout par surmoulage, dans une matière plastique de la tige chauffante (24), la tige chauffante (24) dans la première zone comportant un contour rond formé par la matière plastique.

6. Dispositif d'actionnement selon la revendication 5,
**caractérisé en ce que**
la matière plastique dans la première zone remplit un espace qui s'étend dans une direction axiale de la tige chauffante (24) et est formé dans une isolation électrique (64) de l'au moins un élément de chauffage (40, 70), aussi les pistes conductrices étant recouvertes par l'isolation électrique (64).

7. Dispositif d'actionnement selon la revendication 6,
**caractérisé en ce que**
une épaisseur de l'isolation électrique (64) fournie surtout par un verre et/ou par un matériau céramique dans la zone de l'au moins un élément de chauffage (40, 70) est plus grande que dans la zone des pistes conductrices.

8. Dispositif d'actionnement selon l'une quelconque des revendications 3 à 7,
**caractérisé en ce que**
les conducteurs électriques (46, 48) au moins dans une première zone, dans laquelle pendant une course de l'élément en matière extensible (22) un mouvement du dispositif de fermeture (30) de l'élément en matière extensible (22) relatif à la tige chauffante (24) se produit, et dans une seconde zone qui est en saillie sur le dispositif de fermeture (30), sont pourvus d'une isolation électrique (64).

9. Dispositif d'actionnement selon la revendication 8,
**caractérisé en ce que**
l'isolation électrique (64) fournie surtout par un verre et/ou par un matériau céramique dans la première zone comporte une rugosité plus faible que dans la seconde zone et/ou la tige chauffante (24) par la fourniture d'une isolation électrique (64) comporte un contour rond dans la première zone.

10. Dispositif d'actionnement selon l'une quelconque des revendications 3 à 9,
**caractérisé en ce que**
les conducteurs électriques (46, 48) au moins dans une première zone, dans laquelle pendant une course de l'élément en matière extensible (22) un mouvement du dispositif de fermeture (30) de l'élément en matière extensible (22) relatif à la tige chauffante (24) se produit,
- sont agencés dans des évidements formées dans le corps de base (42) de sorte qu'une isolation électrique (64) appliquée aux conducteurs électriques (46, 48) affleure la face extérieure (44) du corps de base (42) et/ou
- sont formés comme des cylindres circulaires concentriques qui sont isolés électriquement l'un de l'autre au moyen d'une couche isolante électriquement.

11. Dispositif d'actionnement selon l'une quelconque des revendications 3 à 10,
**caractérisé en ce que**
le corps de base (42) est formé d'un matériau électriquement conducteur, surtout d'un acier, une isolation électrique étant agencée entre le corps de base (42) et un des deux conducteurs électriques (46, 48) d'une part et entre le corps de base (42) et l'au moins un élément de chauffage (40, 70) d'autre part, et l'autre des deux conducteurs électriques (46, 48) étant fourni par le corps de base (42).

12. Dispositif d'actionnement selon l'une quelconque des revendications 1 à 11,
**caractérisé en ce que**
le corps de base (42) est formé d'un matériau électriquement isolant, surtout d'un matériau céramique.

13. Dispositif d'actionnement selon l'une quelconque des revendications 3 à 11 ou selon la revendication 12 dans sa référence à l'une quelconque des revendications 3 à 10,
**caractérisé en ce que**
le corps de base (42) est formé comme un corps creux fermé à son extrémité libre, au moins un des conducteurs électriques (46, 48) étant agencé en partie à l'intérieur du corps creux.

14. Dispositif d'actionnement selon l'une quelconque des revendications 1 à 13,
**caractérisé en ce que**
l'au moins un élément de chauffage (40, 70) comporte une couche protectrice (64) fournie surtout par un vernis isolant électriquement et/ou un verre et/ou un matériau céramique, qui est agencée à la surface extérieure de la tige chauffante (24) faisant face à l'au moins une matière extensible (28).

15. Dispositif soupape, surtout soupape thermostatique (10), avec un dispositif d'actionnement selon l'une quelconque des revendications 1 à 14, un élément de soupape (16) du dispositif soupape couplé à l'élément en matière extensible (22) étant déplaçable relatif à la tige chauffante (24) par le chauffage de la matière extensible (28).
